# EUROPEAN PATENT APPLICATION

(11) **EP 4 074 767 A1**
(43) Date of publication of application: **19.10.2022**
(21) Application number: 21168665.4
(22) Date of filing: 15.04.2021
(51) Int. Cl.: C08J 11/06

(54) **PROCESS FOR RECYCLING A POLYOLEFIN**

(71) Applicant: Borealis AG, 1020 Vienna (AT)
(72) Inventor: AL-HAJ ALI, Mohammad, 06850 Kulloo (FI); SLEIJSTER, Henry, 6161 Sittard-Geleen (NL)
(74) Representative: Kador & Partner PartG mbB

(57) **Abstract**

A process for the separation of at least one polyolefin from a product stream originating from a polyolefin recycling process, wherein the product stream comprises the at least one polyolefin and a solvent, the process comprising the steps of separating the product stream into a polyolefin-lean stream and a polyolefin-rich stream; separating the polyolefin-rich stream into a first polyolefin-lean vapor stream and a first condensed polyolefin-rich stream; separating the first condensed polyolefin-rich stream into a last polyolefin-lean vapor stream and a last condensed polyolefin-rich stream.

## Description

The present invention is concerned with a process for separating a polyolefin from a product stream of a polyolefin recycling process. In particular, the present invention relates to such a process allowing for reduced volatile contents in the final recycled polymer. Furthermore, the present invention relates to a simplification of the process in that the remaining streams of separation step can be directly returned to a feed stream of the recycling process. Furthermore, the present invention is concerned with a polyolefin obtainable from such a process.

### Background

The challenge of the disposal of accumulated waste plastics and corresponding environmental issues have received widespread attention from the public and academician. Therefore, besides the concepts of the prevention of plastic waste in general and the prevention of leakage of plastic waste into the environment in particular, recycling of waste plastics material has become an important topic. Waste plastics can be turned into resources for new plastic products. Hence, environmental and economic aspects can be combined in recycling and reusing waste plastics material.

Mid of the 90-ies, several European countries have implemented a more differentiating waste collection system (Recycling Management System, Circular Economy Law), which actually allows a more target orientated collection and separation of plastic materials from other waste materials. Thus, a more or less efficient separation of polymer types from each other can be managed to achieve, after the treatment, finally polymer types enriched and thus more easily recyclable secondary plastic material fractions. The build-up of a suitable waste collection system and especially the set-up of a suitable waste separation infrastructure took place within the last decades to generate a secondary petrochemical raw material source resp. market. Parallel, several plastic recycling processes have been developed resp. in particular improved, primary with the target to increase the achievable product quality of the recyclable polymer materials.

There are different methods of plastic recycling commonly known including mechanical [material recycling], advanced physical or solvent based [solution] and chemical processing [(feedstock recycling, thermochemical such as pyrolysis or gasification, solvolysis]. Among these methods, mechanical recycling and chemical recycling are the most widely practiced.

Although, EU-public collection and pre-sorting systems reached plastic collection rates up to 76 [wt.% (Ger)] in 2018, the direct plastic material recycling rates have been on a lower level for mechanical advanced recycling processes (e.g. 12 [%] for Germany in 2018). Today, advanced mechanical recycling includes separation steps such as shredding, vibrating, rotary sieving, advanced sorting methods supported by spectrometric-methods [e.g. NIR/VIS] and wash operations to reduce organic, biologic and partly odour contaminants primary from the surface of the recyclable plastic material, as well as achieving a polymer type enriched and more homogeneous polymer recyclate fraction. Thereby, plastic type-enriched resp. especially polyolefin-enriched secondary mass streams (> 85; < 95 [wt.%] PO-content) can be obtained such as for example Polypropylene (PP), High-Density-Polyethylene (HDPE), Low-Density-Polyethylene (LDPE), Polyethylene-Terephthalate (PET) and/or Polystyrene (PS). Following, these separated mass streams will be processed to granules (extrusion) and material specific into products converted. Nevertheless, the achievable product quality remains relatively poor and does not allow both food contact and high performance applications and thus products such as flower pots, paint buckets or shampoo bottles are typically for the mechanically recycled materials today.

Especially improved and better performing sorting methods (e.g. colouring flake sorting) should effect both higher concentrations within the specific polymer type fraction and secondary wash operations to reduce more efficiently disturbing contaminants resp. to increase the product quality of the final secondary polymer raw material. Latter includes additionally expenditures concerning a complex process design, waste water treatment, exhaust gas treatment and intermediate product drying coupled with an increased total energy consumption, while keeping emissions as low as feasible.

However, the challenges of difficulties to remanufacture directly mechanical polymer recyclates into high-quality end applications remain, caused by waste components such as multi-layer materials resp. films or mixed flexible film waste materials. Further, important reason can be found in the less predictable and controllable homogeneity of the polymer type material mixture concerning especially historically applied polymerization technology (define material properties such as polymer density, average molecular weight, molecular weight distribution, molecular structure, cross-linking level) and historically applied compounding technology (additive-, filler concentrations and finally multiple pigment compositions). All these quality concerning factors remain inside the mechanically processed bulk mass mixture and cannot be covered by mechanical sorting and applied purification methods, which interact in best case onto the surface of the recyclable polymer material mixture.

A further approach to overcome the lower quality in advanced mechanical polymer recycling can be found in blending mechanical polymer recyclates with virgin polymers, finally to achieve a tolerable, marketable quality for the end application (non-food), whereby the implementable content of mechanically recycled polymer materials stays on a lower level (several [wt.%]), especially for high-quality/high performance end applications.

The second arising plastic recycling route is chemical or feedstock recycling, concerning solvolysis and thermochemical processing. In 2018 the technology share rate of chemical plastic recycling was less than 2 [%] in total. A technology prognosis indicates, that the thermochemical recycling share rate should significantly increase from less than 2 [%] (2018) up to 13 [%] until 2030. However, chemical plastic recycling provides a promising opportunity to recover pre-sorted and pre-treated solid plastic waste anyhow to obtain feedstock for the petrochemical industry, which can be processed to plastics again, as well as to chemical commodities and fuels. To degrade the polymeric structure of the plastic solid mixture to shorter hydrocarbons up to monomeric building blocks, heat, catalysts and solvents have to be applied. Depending on the specific technology, chemical recycling approaches have much higher tolerances towards mixed plastic fractions and impurities and thus are principally capable to deal with contaminated and polymer material mixtures resp. secondary polymeric raw materials. Nevertheless, cross-contaminations of polyolefinic material mixtures with heteroatomic polymers (N/O/S, Halogene) should be preferably avoided.

Nevertheless, abstraction of especially thermochemical plastic processing, especially polyolefin recycling technologies illustrates rather the substitution of fossil based crude oil fractions to already fossil based secondary polymer recyclate materials by applying well-known traditional thermochemical unit operations, which have to be adapted costly to the secondary feedstock source. The specific energy demand remain, concerning the heat-intensive endothermic C-C resp. C-H bonding breakages (cracking, degradation), so that finally the total energy input is significantly higher in comparison to crude oil to virgin polymer processing - principally the degradation of a short chain molecule (e.g. Naphtha within crude oil fractionation) will be replaced by cracking long chain and branched polymers. Independently, the extravagant and energy-consuming thermal degradation remains. Furthermore, the CO₂-emissions of such processes are also higher as long as the necessary applied energy carrier could not easily switched to renewable/sustainable energy carriers.

The third plastic recycling route is advanced physical or Solvent based Recycling (SbR), which showed a plastic recycling market share of less than 1 % in 2018 in Germany. In SbR-processing the polymer will be initially dissolved in an appropriate solvent and following, either the solubility of the dissolved polymer will be decreased by the addition of a non-solvent (dissolution/precipitation) and/or a solidification of the polymer will be caused by the preferably complete separation of the solvent from the solidified polymer by thermal unit operations (evaporation, drying etc.).

Polyolefin-SbR-processing show similarities to traditional PO-polymerization processes, whereby the solvent for the monomers (olefins) and temporary formed oligomers (waxes) and short chain polymers is for example a refinery fraction (e.g. kerosene) until the solubility limits will be exceeded (long chain polyolefins are formed during polymerization) and the final polyolefin precipitates forming a polyolefin-solvent slurry (e.g. Chevron slurry process). An extraordinary polyolefin process is the solution PO-polymerisation process, whereby the olefin is initially dissolved in a paraffinic solvent blend, polymerized and the finalized polyolefin will stay in solution until the process conditions will significantly change by depressurization resp. flash devolatilization.

Therefore in polyolefin recycling technology, in particular in solvent based polyolefin recycling technology, the downstream processing of the product stream is essential for producing a product with low volatiles content. The downstream processing takes place via a separation step such as gravimetric, i.e. liquid-liquid separation, or pressure flashing, where the solution is heated and depressurized in a flash vessel.

EP 3 339 361 A1 describes a solvent-based polymer recycling process including the step of contacting a waste polymer at a temperature of 110 t0 170 °C and at a pressure of 1,100 psig to 2,100 psig with n-butane. This step is repeated four times. The residue of this step is subsequently dissolved again in n-butane at 130 to 180 °C and 2,000 psig to 3,000 psig. Furthermore, settling and removal of non-dissolved polymer is performed and an adsorption step is added using a pure silica bed followed by an aluminium-oxide (zeolite) bed at 130 to 180 °C and 350 psig to 20,000 psig . The polymer is then precipitated from the solvent. Finally, the solvent is removed from the polymer by a vapor-liquid, liquid-liquid or solid-liquid separation step.

The disadvantage of this process is that under certain circumstances, it is not able to remove all solvents from the final product. This is in particular problematic in medical and food applications.

DE 102016015199 A1 is using an atmospheric dissolving process for the separation of post-industrial consumer waste, in particular the separation of polyamide, polyethylene and/or polypropylene. The used solvent is a higher non-polar gasoline (kerosene) fraction having a boiling point temperature of 80 to 140 °C.

Disadvantage of this process is a high residual solvent content in the intermediate polymer product (up to 5 vol.-%).

### Problem of the invention

One of the major concerns in modern polyolefin recycling processes are energy efficiency and cost considerations as well as product quality. The prior art lacks the description of an energy efficient method to further reduce the volatile content of polymers retrieved from a polymer recycling process, in particular from a solvent-based polyolefin recycling process.

### Object of the present invention

Therefore, there is the need for a process for separating a polyolefin from a product stream of a polyolefin recycling process, which is more energy efficient and allows for less volatile contents in the recycled polymer.

### Summary of the invention

It has now surprisingly been found that above-mentioned object can be achieved by a process for the separation of at least one polyolefin from a product stream originating from a polyolefin recycling process, wherein the product stream comprises the at least one polyolefin and a solvent, the process comprising the steps of separating the product stream into a polyolefin-lean stream and a polyolefin-rich stream; separating the polyolefin-rich stream into a first polyolefin-lean vapor stream and a first condensed polyolefin-rich stream; separating the first condensed polyolefin-rich stream into a last polyolefin-lean vapor stream and a last condensed polyolefin-rich stream.

Combining a polymer recycling process with the provided separation process has the advantage of obtaining a polymer with decreased levels of volatiles therein.

Preferably, in the process of the present invention the polyolefin-lean stream and the first polyolefin-lean vapor stream are returned to an initial feed stream of the polyolefin recycling process. Most preferably, the polyolefin-lean stream and the first polyolefin-lean vapor stream are returned to an initial feed stream of the polyolefin recycling process without any further purification.

Returning the streams back to the recycling process results in less power and solvent consumption allowing for a more energy efficient process. Furthermore, returning without purification simplifies the process and also reduces the energy consumption.

It has been further surprisingly found that above-mentioned object can be achieved by a polyolefin obtainable by a process for the separation of at least one polyolefin from a product stream originating from a polyolefin recycling process, wherein the product stream comprises the at least one polyolefin and a solvent, the process comprising the steps of separating the product stream into a polyolefin-lean stream and a polyolefin-rich stream; separating the polyolefin-rich stream into a first polyolefin-lean vapor stream and a first condensed polyolefin-rich stream; separating the first condensed polyolefin-rich stream into a last polyolefin-lean vapor stream and a last condensed polyolefin-rich stream.

Most preferably, the polyolefin is obtainable by a process in which the polyolefin-lean stream and the first polyolefin-lean vapor stream are returned to an initial feed stream to the polyolefin recycling process without any further purification.

### Definitions

The expression *'volatiles'* or *'volatile compounds'* as used herein has to be understood as compounds having significantly lower molecular weight in comparison to the polyolefin separated in the process of the invention. Such compounds typically are present in the gaseous form when being exposed to a flash separator. Commonly, the volatile compounds are a mixture of volatile hydrocarbons.

*'Flash separators'* have been known in the prior art for decades (also as lowpressure separators). As it is well known in the art, a liquid feed is passed to a flash vessel operated at a reduced pressure. Thereby a part of the liquid phase vaporizes and can be withdrawn as an overhead stream (or a vapor stream) from the low pressure separator. The part remaining in liquid phase is then withdrawn as a condensed stream from the flash vessel. Operating the low pressure separator under conditions such that both vapor and liquid phases are present in the flash vessel describes this situation.

*'Gravity separators'* or '*liquid-liquid separators'* as used herein comprise a vessel in which a two-phase (i.e. liquid/liquid) system can be separated. The liquid phase with the lower relative density (polyolefin-lean phase) is withdrawn from the upper end of the vessel whereas the liquid phase with the higher relative density (in the present case the polyolefin-rich phase) is withdrawn from the bottom end of the vessel.

The term *'vacuum pressure conditions'* as used herein denotes vacuum pressures between 5 mbar to 100 mbar. Pressures lower than 5 mbar are disadvantageous in view of energy consumption and resulting costs. Pressures higher as 100 mbar result in too high amounts of volatiles in the final polymer.

### Description of the drawings

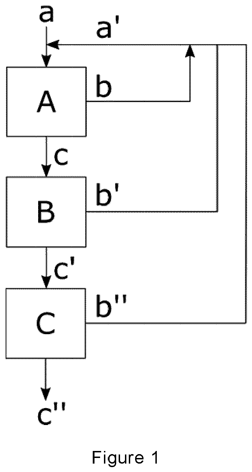

Figure 1 shows a schematic layout of the process of the present invention.

### Reference signs

- A: first separation step (step A)
- B: second separation step (step B)
- C: third separation step (step C)
- a: product stream
- a': initial feed stream
- b: polymer-lean stream of step A
- c: polymer-rich stream of step A
- b': first polymer-lean vapor stream of step B
- c': first condensed polymer-rich stream of step B
- b": last polymer-lean vapor stream of step C
- c": last condensed polymer-rich stream of step C

### Detailed description of the invention

In the following, the invention is described in detail.

In the most general embodiment of the invention, the process for the separation of at least one polyolefin originating from a product stream (a) from a polyolefin recycling process, wherein the product stream (a) comprises the at least one polyolefin and a solvent, comprises the steps of:
A) separating the product stream (a) into a polyolefin-lean stream (b) and a polyolefin-rich stream (c);
B) separating the polyolefin-rich stream (c) into a first polyolefin-lean vapor stream (b') and a first condensed polyolefin-rich stream (c');
C) separating the first condensed polyolefin-rich stream (c) into a last polyolefin-lean vapor stream (b") and a last condensed polyolefin-rich stream (c").

Preferably, in the process of the present invention, the polyolefin-lean stream (b) and/or the first polyolefin-lean vapor stream (b') are returned to an initial feed stream (a') of the polyolefin recycling process.

Preferably, the polyolefin recycling process is a solvent-based polyolefin recycling process. In such a process, waste polyolefin material is dissolved again in solvent at elevated temperatures and pressures to remove impurities such as additives, pigments and other unwanted waste material.

The solvent is usually introduced by the recycling process. Nevertheless, also in waste polyolefin material still solvent from the polyolefin polymerization process may remain. The content of these volatile components can be reduced by the present process.

Generally, the solvent must be able to solve polyolefins, in particular the polyolefin to be separated in the process of the invention, to allow for a solvent-based a recycling process. Therefore, preferably, the solvent is a non-polar solvent. Therefore, the solvent preferably is a hydrocarbon. More preferably, the solvent is a paraffinic solvent due to the paraffinic nature of polyolefins (*'Similia similibus solventum'*)*.* Aromatic hydrocarbon solvents are known for good solvent properties and can therefore also be considered. Nevertheless, a drawback of aromatic hydrocarbons lies in enhanced dissolution of polystyrene. On the other hand, e.g. n-alkanes are known as not dissolving polystyrene. Most importantly, the solvent should not dissolve polar polymers such as PET, PVC, PA, PC, PUR, or bio-based fractions such as cellulose or lignin. Furthermore, also preferably, the solvent should not react chemically with the polymer. Furthermore, preferably, the boiling point at 1 bar pressure of the solvent is higher than 70 °C. Therefore, preferably, the solvent is selected from the list of low boiling solvents and high boiling solvents. Low boiling solvents comprise n-alkanes and aromatic hydrocarbons, such as toluene and xylene. The advantage of low boiling solvents is that they can be separated from dissolved polyolefins with less energy consumption. High-boiling solvents comprise paraffinic gas oil or vacuum gas oil. Such solvents have the disadvantage that they are difficult to be removed from the product. Therefore, preferably, the solvent (3) is selected from alkanes selected from the list consisting of C4, C5, C6, C7, C8, C9, and C10 alkanes, or mixtures thereof, more preferably from n-alkanes selected from the list consisting of C4, C5, C6, C7, C8, C9, and C10 n-alkanes, or mixtures thereof.

The polyolefin in the product stream (a) can be a mixture of polymers selected from the list consisting of polyethylene (PE), in particular high density polyethylene (HDPE), low-density polyethylene (LDPE) or linear low-density polyethylene (LLDPE), and polypropylene (PP). Preferably, the polyolefin of the product stream (a) comprises polypropylene. More preferably, the polyolefin of the product stream (a) consists of polypropylene. Most preferably, polypropylene is the only polymer present in the product stream (a).

In a preferred embodiment of the invention, in step A) 55 to 90 wt.-%, preferably 60 to 70 wt.-% of the solvent are removed from the product stream (a). Likewise, in a preferred embodiment of the invention, in step B) 10 to 40 wt.-%, preferably 25 to 30 wt.-% of the solvent are removed from the polyolefin-rich stream (c). Moreover, in a preferred embodiment of the invention, in step C) up to 5 wt.-%, preferably 0.2 to 5 wt.-% of the solvent are removed from the first condensed polyolefin-rich stream (c'). Hence, mostly preferred, in step A) 60 to 70 wt.-% of the solvent are removed from the product stream (a), in step B) 25 to 30 wt.-% of the solvent are removed from the polyolefin-rich stream (c), and in step C) 0.2 to 5 wt.-% of the solvent are removed from the first condensed polyolefin-rich stream (c')

### Step A)

Preferably, step A) can be carried out as a vapor-liquid separation step or as a liquid-liquid separation step. More preferably, step A) is carried out as a vapor-liquid separation step, most preferably as a flash separation step. Preferably, the polyolefin-lean stream (b) is returned to the polymer recycling process upon adjusting pressure and temperature to the requirements of the recycling process. Most preferably, the polyolefin-lean stream (b) is returned to the recycling process without any further purification.

If step A) is a vapor-liquid separation step, more preferably as a flash separation step, it is preferably carried out at a temperature of 150 to 300 °C, preferably 175 to 275 °C, and most preferably 200 to 250 °C. Moreover, in such case, step A) is preferably carried out at a pressure of 1 to 15 bar, more preferably 2 to 12 bar, and most preferably 2.5 to 10 bar. Most preferably, in such case, step A) is carried out at a temperature of 200 to 250 °C and at a pressure of 2.5 to 10 bar.

If step A) is carried out as a liquid-liquid separation step, the separation temperature is preferably 100 to 400 °C, more preferably 110 to 380 °C and most preferably 120 to 370 °C. Moreover, in such case, step A) is preferably carried out at a pressure of 10 to 70 barg, more preferably a 15 to 65 barg, and most preferably at 20 to 60 barg. Most preferably, in such case, step A) is preferably carried out at a temperature of 120 to 370 °C and at a pressure of 20 to 60 barg.

### Step B)

Also preferably, step B) is carried out as a flash separation step. In such case, preferably, step B) is carried out at a temperature of 150 to 300 °C, more preferably 175 to 275 °C, and most preferably 200 to 250 °C. Moreover, in such case, step B) is preferably carried out at a pressure of 1 to 15 bar, more preferably 2 to 12 bar, and most preferably 2.5 to 10 bar. If flash separation steps are carried out several times in a row, the pressure is lowered step after step and the temperature of the polyolefin is usually increased step after step. Thus, the pressure in step B) has to be lower than in step A), if step A) is carried out as a flash separation step. Furthermore, the temperature in step B) has to be higher than in step A), if step A) is carried out as a flash separation step. Most preferably, in such case, step B) is carried out at a temperature of 200 to 250 °C and at a pressure of 2.5 to 10 bara. Preferably, the first polyolefin-lean vapor stream (b') is returned to the polymer recycling process upon adjusting pressure and temperature to the requirements of the recycling process. Most preferably, the first polyolefin-lean vapor stream (b') is returned to the recycling process without any further purification.

### Step C)

In a preferred embodiment of the invention step C) is a flash separation step preferably with preceding addition of a stripping agent into the first condensed polyolefin-rich stream (c') or an extruding/degassing step.

If step C) is a flash separation step, a stripping agent is preferably added to the first condensed polyolefin-rich stream (c') before being fed to the flash separator. More preferably, the stripping agent is fed in an amount of 2 to 4 wt.-% with respect to the total weight of the first condensed polyolefin-rich stream (c'). If flash separation steps are carried out several times in a row, the pressure is lowered step after step and the temperature is usually increased step after step. Thus, the pressure in step C) has to be lower than in step B), if step C) is carried out as a flash separation step. Furthermore, the temperature in step C) has to be higher than in step B), if step C) is carried out as a flash separation step. Preferably, in case step C) is a flash separation step, step C) is carried out at a temperature of 150 to 300 °C, preferably 175 to 275 °C, and most preferably 200 to 250 °C. Moreover, in such case, step C) is preferably carried out at vacuum pressure conditions. Hence, most preferably, in case step C) is a flash separation step, the stripping agent is fed in an amount of 2 to 4 wt.-% with respect to the total weight of the first condensed polyolefin-rich stream (c') before the first condensed polyolefin-rich stream (c') enters the flash separator, and step C) is carried out at a temperature of 200 to 250 °C and at vacuum pressure conditions. Preferably, the last polyolefin-lean vapor stream (b") is purified in a recovery section and subsequently returned to the initial feed stream (a').

If step C) is an extruding/degassing step, the first condensed polyolefin-rich stream (c') is preferably fed to a devolatilization extruder. Preferably, the extruder has a backward degassing at a pressure in the range of 0.5 bar above atmospheric pressure to 0.5 bar below atmospheric pressure, preferably at atmospheric pressure, whereby atmospheric pressure denotes the natural atmospheric pressure of the earths atmosphere varying at about 1 atm, and forward degassing domes at vacuum conditions. Most preferably, the extruder makes use of a stripping agent dosing in between the degassing domes.

The stripping agent is preferably selected from the list consisting of carbon dioxide, nitrogen, and water. Most preferably, the stripping agent is water.

### Polymer

The polyolefin obtainable by a process according to the process of the present invention preferably comprises less than 500 ppm volatiles, preferably less than 200 ppm volatiles, most preferably equal to or less than 150 ppm.

### Test Methods

### a) Volatiles content

The volatile content of the polyolefin can be determined by using head space extraction according to VDA 277:1995 using a gas chromatograph and a headspace method. The equipment was an Agilent gas chromatograph with a WCOT-capillary column (wax type) of 30 m length and 0.25 mm x 1.0 micrometer inner diameter (1 µm film thickness). A flame ionization detector was used with hydrogen as a fuel gas. The GC settings were as follows: 3 minutes isothermal at 50 °C, heat up to 200 °C at 12 K/min, 4 minutes isothermal at 200 °C, injection-temperature: 200 °C, detection-temperature: 250 °C, carrier helium, flow-mode split 1:20 and carrier gas flow rate of 1 ml/min. The emission potential was measured on the basis of the sum of all values provided by the emitted substances after gas chromatography analysis and flame ionization detection with acetone as the calibration standard. Sample introduction (pellets, about 2 g) was by headspace analysis (20 ml head space vial) after conditioning at 120 °C for 5 hours prior to the measurement. The unit is microgram carbon per gram of sample, respectively ppm.

### Examples

In the following inventive examples, the present invention is exemplified using calculations with Aspen HYSYS.

### Inventive Example IE1

A typical product stream as received from the dissolution section of a solvent-based polypropylene recycling process is modeled as consisting of polypropylene and n-hexane at a temperature of 150 °C and 30 barg. The outlet stream is then heated to 230 °C and fed to a flash separator operating at 8 barg. This mixture is separated in a flash separator, the polypropylene polymer-rich condensed phase is removed and used for the next separation steps. The polypropylene polymer-lean phase is returned directly to the dissolution section of the recycling process without any further purification, thereby removing 85 wt% of the solvent from the polymer.

Subsequently, the polypropylene polymer-rich phase is heated to 240 - 250 °C and fed to a flash separator operated at 1 - 2 bara. Due to the flashing operation, the temperature of the polypropylene polymer-rich phase decreases to 190 - 210 °C. Again, the polypropylene polymer-lean vapor phase is condensed and returned directly to the dissolution section of the recycling process without any further purification.

The polypropylene polymer-rich phase of the flash separation step is extruded using a typical devolatilization extruder with a backward degassing at atmospheric conditions and forward degassing domes at vacuum conditions. With the usage of a water dosing in between the degassing domes volatiles are stimulated to diffuse out of the polypropylene polymer. The level of volatiles in the polypropylene polymer is below 150 ppm.

### Inventive Example IE2

The process of IE1 is used up until and including the flash separation step.

The polypropylene polymer-rich phase of the flash separation step is again heated to 240 - 250 °C and water is mixed to the polypropylene polymer-rich phase in an amount of 2 - 4 wt.-% with respect to the total weight of the polypropylene polymer-rich phase. Using a second flash vessel operated at strong vacuum conditions enhances the volatiles removal. The level of volatiles in the polypropylene polymer is below 150 ppm. The polypropylene polymer-lean phase of the second flash separation step is fed to a recovery section to purify solvent. The polymer phase will be fed to an extruder.

### Inventive Example IE3

A typical product stream as received from the dissolution section of a solvent-based polypropylene recycling process is modeled as consisting of polypropylene and n-hexane at a temperature of 150 °C and 30 barg. This mixture is separated in a liquid-liquid separator, the polypropylene polymer-rich phase is removed and used for the next separation steps. The polypropylene polymer-lean phase is returned directly to the dissolution section of the recycling process without any further purification.

Subsequently, the polypropylene polymer-rich phase is heated to 240 - 250 °C and fed to a flash separator operated at 1 - 2 bara. Due to the flashing operation, the temperature of the polypropylene polymer-rich phase decreases to 190 - 210 °C. Again, the polypropylene polymer-lean vapor phase is condensed and returned directly to the dissolution section of the recycling process without any further purification.

The polypropylene polymer-rich phase of the flash separation step is extruded using a typical devolatilization extruder with a backward degassing at atmospheric conditions and forward degassing domes at vacuum conditions. With the usage of a water dosing in between the degassing domes volatiles are stimulated to diffuse out of the polypropylene polymer. The level of volatiles in the polypropylene polymer is below 150 ppm.

### Inventive Example IE4

The process of IE3 is used up until and including the flash separation step.

The polypropylene polymer-rich phase of the flash separation step is again heated to 240 - 250 °C and water is mixed to the polypropylene polymer-rich phase in an amount of 2 - 4 wt.-% with respect to the total weight of the polypropylene polymer-rich phase. Using a second flash vessel operated at strong vacuum conditions enhances the volatiles removal. The level of volatiles in the polypropylene polymer is below 150 ppm. The polypropylene polymer-lean phase of the second flash separation step is fed to a recovery section to purify solvent. The polymer phase will be fed to an extruder.

## Claims

1. A process for the separation of at least one polyolefin from a product stream (a) originating from a polyolefin recycling process, wherein the product stream (a) comprises the at least one polyolefin and a solvent, the process comprising the steps of:
A) separating the product stream (a) into a polyolefin-lean stream (b) and a polyolefin-rich stream (c);
B) separating the polyolefin-rich stream (c) into a first polyolefin-lean vapor stream (b') and a first condensed polyolefin-rich stream (c');
C) separating the first condensed polyolefin-rich stream (c') into a last polyolefin-lean vapor stream (b") and a last condensed polyolefin-rich stream (c").

2. The process according to claim 1, wherein the polyolefin-lean stream (b) and/or the first polyolefin-lean vapor stream (b') are returned to an initial feed stream (a') of the polyolefin recycling process.

3. The process according to claims 1 or 2, wherein the polyolefin is a polypropylene polymer.

4. The process according to claim 3, wherein the solvent is selected from the list consisting of C4, C5, C6, C7, C8, C9, and C10 n-alkanes, or mixtures thereof.

5. The process according to any of the preceding claims, wherein in step A) 55 to 90 wt.-% of the solvent are removed from the product stream (a).

6. The process according to any of the preceding claims, wherein in step B) 10 to 40 wt.-% of the solvent are removed from the polyolefin-rich stream (c).

7. The process according to any of the preceding claims, wherein in step C) up to 5 wt.-% of the solvent are removed from the first condensed polyolefin-rich stream (c').

8. The process according to any of the preceding claims, wherein step A) is a flash separation step.

9. The process according to any claim 8, wherein step A) is carried out at a temperature of 200 to 250 °C and at a pressure of 2.5 to 10 barg.

10. The process according to any of the preceding claims, wherein step B) is a flash separation step.

11. The process according to claim 10, wherein step B) is carried out at a temperature of 200 to 250 °C and at a pressure of 1 to 10 bara.

12. The process according to any of the preceding claims, wherein step C) is a flash separation step with preceding addition of a stripping agent into the first condensed polyolefin-rich stream (c') or an extruding/degassing step.

13. The process according to claim 12, wherein step C) is a flash separation step and is carried out at a temperature of 200 to 250 °C and at vacuum pressure conditions.

14. A polyolefin separated from a solvent obtainable by a process according to any of the preceding claims 1 to 13.

15. The polyolefin according to claim 14, wherein the polyolefin comprises less than 150 ppm volatiles.
